# EUROPÄISCHE PATENTSCHRIFT

(11) **EP 1 396 990 B1**
(45) Veröffentlichungstag und Bekanntmachung des Hinweises auf die Patenterteilung: **31.10.2007**
(21) Anmeldenummer: 03102574.5
(22) Anmeldetag: 18.08.2003
(51) Int. Cl.: H04M 3/51

(54) **Verfahren zum Verwalten von Daten in einer automatischen Anrufverteilung**
Method for data management in an automatic call distribution
Procédé de gestion de données dans une distribution d'appels automatique

(30) Priorität: 06.09.2002 DE 10241358
(43) Veröffentlichungstag der Anmeldung: 10.03.2004
(73) Patentinhaber: Siemens Enterprise Communications GmbH & Co. KG, 81379 München (DE)
(72) Erfinder: Drobek, Erich, 82008 Unterhaching (DE)

(56) Entgegenhaltungen:
- WO-A-98/49809
- US-A- 5 937 051
- PASZKOWSKY I: "DETAILS ON DISPLAY" TELCOM REPORT, SIEMENS AG, BERLIN, DE, Bd. 20, Nr. 2, 1997, Seiten 38-39, XP000199851 ISSN: 0344-4880

## Beschreibung

Die Erfindung betrifft ein Verfahren zum Verwalten von Daten in einer automatischen Anrufverteilung nach dem Oberbegriff des Anspruchs 1 und eine Anordnung zum Ausführen des Verfahrens nach dem Oberbegriff des Anspruchs 7.

CTI-Verfahren und Verfahren zur automatischen Anrufverteilung werden vor allem zum Betrieb von Call-Centern eingesetzt. CTI steht dabei als Abkürzung für den Fachbegriff "Computer and Telephone Integration" stellt dabei einen Sammelbegriff für telephonische Kommunikationsanwendungen dar, die mit Hilfe eines Personalcomputers eine Abwicklung von Telephongesprächen komfortabler gestalten. Unter diesem Sammelbegriff werden grundlegende Funktionalitäten wie beispielsweise ein Auswählen von Daten aus einer Datenbank, ein Aufzeichnen von Notizen während eines Gesprächs oder ein Anzeigen von Gesprächsnotizen zusammengefasst, die neben anderen Arbeitsabläufen grundlegend für den Betrieb von Call-Centern sind.

Zur Verteilung und Abwicklung von Anrufen innerhalb eines Call-Centers zu und an einzelnen Arbeitsplätzen wird eine automatische Anrufverteilung (Automatic Call Distribution, ACD) verwendet. Der Fachbegriff ACD beschreibt hierbei eine leistungsfähige Anwendung des CTI-Prinzips auf eine Call-Center-Architektur und umfasst ein Standardangebot an grundlegenden Leistungsmerkmalen, wie Wartefeldsteuerungen, Überlaufsteuerungen, Ansagen, Musikeinblendungen, Anrufverteilung auf ACD-Agenten, ein Erstellen von Statistiken und anderen Merkmalen.

Einzelne Arbeitsplätze in Call Centern sowie Mitarbeiter an diesen Arbeitsplätzen werden als Agenten, ACD-Agenten oder Agentenarbeitsplätze bezeichnet. Der Begriff Agent beschreibt hierbei den Mitarbeiter in einem Call Center, während sich der Begriff ACD-Agent auf die hard- und softwaremäßige Ausstattung des Arbeitsplatzes im Call Center bezieht und die Anbindung und Vernetzung des einzelnen Arbeitsplatzes in die übergeordnete Struktur der automatischen Anrufverteilung ACD zum Ausdruck bringt. Im folgenden wird der Begriff "Agentenarbeitsplatz" als Synonym für die Begriffe "Agent" oder "ACD-Agent" verwendet, sofern nichts anderes gesagt ist.

Eine weitere grundlegende Bezeichnung stellt der Begriff automatische Rufnummern-Identifikation (Automatic Number Identification, ANI) dar. Darunter wird ein Leistungsmerkmal einer Rufnummernerkennung eines Anrufers in einem Wählnetz, beispielsweise einem ISDN-Netz verstanden.

Im Bereich einer geräte- und vorrichtungsseitigen Ausstattung eines Call Centers wird häufig der Begriff einer interaktiven Sprach-Antwort-Einheit (Interactive Voice Response Unit, IVR) verwendet. Dabei handelt es sich um eine Gesamtheit von Verfahren und Komponenten, die zum Ausführen eines automatisierten sprachgestützten Telefondialoges unter Verwendung einer Telefontastatur benötigt werden. Der Begriff der interaktiven Sprach-Antwort-Einheit und die in diesem Fachgebiet gebräuchliche Abkürzung IVS beschreibt dann sowohl das Verfahren, als auch die dazu benötigten Komponenten und Verfahrensschritte.

Weiterhin ist im nachfolgenden Zusammenhang von einem DNIS-Dienst die Rede. DNIS steht für den Begriff Dialed Number Identification Service und beschreibt einen Dienst im wesentlichen zum Generieren einer Zeichenfolge, die eine von einem Anrufer angewählte Nummer anzeigt und darüber hinaus festlegt, wie der in das Call Center einlaufende Anruf verarbeitet werden soll. Durch den DNIS-Dienst wird beispielsweise festgelegt, ob ein Anruf an eine Bestellannahme oder einen technischen Service innerhalb des Call Centers weitergeleitet werden soll.

Nach dem derzeitigen Stand der Technik werden in einem Call Center eingehende Anrufe im wesentlichen dadurch verarbeitet, indem mittels der ACD Anrufe zu einzelnen Agenten des Call Centers durchgestellt und mit den Anruferdaten verknüpfte Kundendaten dem Agenten zugeleitet werden. Die dazu benötigten Daten werden aus einer bereits vorliegenden Datenbasis eines Unternehmens entnommen. Diese ergeben sich in der Regel aus bereits vorliegenden Geschäftsverbindungen des Unternehmens und des Anrufers. Dem Agenten werden diese geschäftsrelevanten Informationen über den Anrufer auf einem Monitor an seinem Arbeitsplatz dargestellt. Eine solche Vorgehensweise einer Kopplung einer ACD-Vermittlung und einer Darstellung geschäftsrelevanter Anruferdaten wird mit dem Fachbegriff "Screen Popup" bezeichnet.

Diese Kopplung wird dadurch realisiert, indem parallel zur ACD-Weiterleitung begleitende Informationen zum ACD-Agenten gesendet werden. Die begleitenden Informationen enthalten im wesentlichen Daten aus einer ANI-Identifikation, Parameter aus einem DNIS-Dienst oder Daten aus der IVR-Einheit. Auf der Basis dieser Informationen sucht das Endgerät des ACD-Agenten in den vorliegenden Datenbeständen die zum Anrufer passenden Informationen heraus und zeigt diese an einem Monitor des ACD-Arbeitsplatzes an.

Eine derartige Vorgehensweise weist einige gravierende Nachteile und Mängel auf. Ein erster Nachteil besteht darin, dass ein Zugriff auf Anruferdaten erst dann möglich ist, wenn der Anruf zum ACD-Agenten tatsächlich durchgestellt und dort angenommen worden ist. Bei einer starken Belastung des Call Centers in Hauptanrufzeiten oder bei einer großen Anruferzahl ist dies oft mit einem erheblichen Zeitaufwand verbunden, der besonders für den Anrufer störend ist, da er fallweise auf eine Warteschleife auch dann verwiesen werden muss, wenn sein Anruf eigentlich schon zum betreffenden ACD-Agenten durchgestellt worden ist, weil am ACD-Agenten die Kundendaten noch nicht vorliegen.

Ein weiterer Nachteil besteht in der fehlenden Datensicherheit, da dem ACD-Agenten ein volles Zugriffsrecht auf den Datenbestand des Unternehmens eingeräumt werden muss. Weil viele Unternehmen keine eigenen Call Center betreiben, sondern die diesbezüglichen Operationen aus Kosten- oder betrieblichen Gründen an weitere Dienstleister übertragen, bedeutet dies, dass der Dienstleister einen vollen Zugang zu internen Daten des Unternehmens erhält. Eine solche Verfahrensweise ist aus Datenschutzgründen und dem Schutz von Betriebsgeheimnissen unerwünscht und sollte nach Möglichkeit vermieden werden. Das gleiche gilt auch bei Arbeitsplätzen in Verfahren zur Telearbeit. Bei einem Verfahren nach dem Stand der Technik besteht auch hier ein erhebliches Sicherheitsrisiko.

Bekannte Verfahren und Anordnungen zum Verwalten von CTI-Daten in einer automatischen ACD-Anrufverteilung sind in WO 9849809 und US 5 937 051 beschrieben.

Es besteht vor diesem Hintergrund die Aufgabe, ein Verfahren und eine Anordnung zum Verwalten von CTI-Daten in einer automatischen ACD-Anrufverteilung anzugeben, das die genannten Nachteile und Probleme weitgehend vermeidet.

Diese Aufgabe wird hinsichtlich des Verfahrensaspektes mit einem Verfahren nach den Merkmalen des Anspruchs 1 und hinsichtlich des Anordnungsaspektes mit den Merkmalen des Anspruchs 7 gelöst.

Der Grundgedanke des erfindungsgemäßen Verfahrens besteht darin, zunächst Anruferdaten an einer Call-Center-Weiterleitung und/oder einer interaktiven Sprach-Antwort-Einheit von einem eingehenden Anruf entgegenzunehmen, diese danach an eine CTI-Instanz zur Weiterleitungssteuerung zu übermitteln, anschließend durch die CTI-Instanz auf der Basis der Information aus den Anruferdaten Kundendaten aus einer Kundendatenbasis zu ermitteln und die Kundendaten in ein Kundendatendokument zu überführen, wobei danach von einem Agentenarbeitsplatz ein Zugriff auf das Kundendatendokument erfolgt, unabhängig von einem tatsächlichen Durchstellen des Anrufes zum Agentenarbeitsplatz.

Mit einer solchen Verfahrensweise werden Kundendaten aufgrund eingehender Anruferdaten aus der Kundendatenbasis ermittelt und bereitgestellt, ohne dass der Anruf bis zum Agentenarbeitsplatz durchgestellt werden muss. Es genügt bereits, dass die Call-Center-Weiterleitung einen Anruf entgegengenommen und den Anrufer identifiziert hat. Die Kundendaten des Anrufers werden der Kundendatenbasis auf der Basis dieser Identifikation entnommen und in ein Dokument transferiert, dass anschließend unabhängig vom eigentlichen Durchstellvorgang des Anrufs dem betreffenden Agenten am Agentenarbeitsplatz auf Abruf bereitsteht. Damit ist einerseits gewährleistet, dass die Weiterleitung und Durchstellung von der Ermittlung von Kundendaten entkoppelt ist und das andererseits vom Agentenarbeitsplatz aus kein direkter Zugriff auf die Kundendatenbasis möglich ist. Der Agent erhält die Kundendaten nicht direkt aus der Kundendatenbasis, sondern aus dem aus den Kundendaten erzeugten Kundendatendokument und greift auch nur auf dieses zu. Das bedeutet, dass operativ eine Art "temporäre Kundendatenbank" generiert und bearbeitet wird, die vom Agentenarbeitsplatz aus verwaltet werden kann, ohne dass es dem Agenten möglich ist, auf die eigentliche, vom Unternehmen bereitgestellte "interne Kundendatenbank" zuzugreifen.

Dabei wird eine eindeutige Zuordnung des erzeugten Kundendatendokumentes zu einem Agentenarbeitsplatz, beziehungsweise zu einem Agenten mit einer speziellen Arbeitsaufgabe grundsätzlich auf zwei verschiedene Arten sichergestellt.

Bei einer ersten Art der Zuordnung des erzeugten Kundendatendokumentes zum jeweiligen Agentenarbeitsplatz werden abgestufte Zugriffsberechtigungen angewendet. Dazu wird bei einem Einbuchungsvorgang eines Agenten und/oder eines Agentenarbeitsplatzes ein vorab festgelegtes Agentenprofil aktiviert, das vorab festgelegte Zugriffsberechtigungen auf Kundendatendokumente enthält. Die CTI-Instanz erstellt anschließend auf der Basis des aktivierten Agentenprofils ein dazu passendes Kundendatendokument, wobei über den Agentenarbeitsplatz ein Zugriff auf die Daten dieses Kundendatendokumentes erfolgt.

Bei einer zweiten Zuordnungsart wird ebenfalls ein Agentenprofil mir vorab festgelegten Zugriffsberechtigungen aktiviert, wobei gleichzeitig dazu durch die CTI-Instanz eine Gesamtheit von Kundendatendokumenten erstellt wird, die zu unterschiedlichen Agentenprofilen passende Kundendaten und Zugriffsrechte auf Kundendatendokumente aufweisen. Von einem Agentenarbeitsplatz ist dann ein Zugriff auf ausschließlich diejenigen Kundendatendokumente möglich, deren Zugriffsrechte dem jeweiligen Agentenprofil entsprechen.

Das Agentenprofil erfüllt somit zwei Funktionen. Zum einen ist damit festgelegt, welches Arbeitsgebiet ein betreffender Agent bearbeitet und welche Daten dafür in ein Kundendatendokument übernommen werden müssen. Zum anderen werden damit auch Zugriffsrechte einzelner Agenten untereinander abgegrenzt. Arbeitsgebiet und Zugriffsrechte korrespondieren somit miteinander und können hierarchisch geordnet werden. So sind insbesondere Agentenprofile möglich, die einem Status eines "Gruppenleiters", eines "Einzelbearbeiters eines ersten Arbeitsgebietes", eines "Einzelbearbeiters eines zweiten Arbeitsgebietes" und so weiter entsprechen. Dadurch wird sichergestellt, dass einzelne Kundendatendokumente nur von einem festgelegten und kontrollierbaren Kreis von Agenten bearbeitet werden. Zweckmäßigerweise erfolgt dies in Übereinstimmung mit einer Struktur von Call-Center-Unterabteilungen, Agentenarbeitsgruppen, Gruppen von Einzelagenten, logischen Gliederungen der Kundendatenbasis und dergleichen weiteren logistischen bzw. sicherheitsrelevanten Anforderungen.

Weiterhin wird eine Zugriffsadresse, die auf einen durch das Kundendatendokument belegten Speicherbereich verweist anhand der für den betreffenden Agentenarbeitsplatz vergebenen Zugriffsberechtigungen anhand des Agentenprofils übermittelt. Dadurch wird sichergestellt, dass nur an diejenigen Agentenarbeitsplätzen eine Information über ein bereitstehendes Kun dendatendokument übermittelt wird, die tatsächlich auch über eine Zugriffsberechtigung auf dieses Kundendatendokument verfügen. Diese Ausgestaltung gewährleistet somit zusätzlich eine Optimierung der Verwaltung der Kundendatendokumente, eine Vermeidung unnötiger Datenübertragungen, sowie eine Erhöhung der Datensicherheit zwischen verschiedenen Unterabteilungen oder Hierarchien von Agentenarbeitsplätzen bei der Bearbeitung der Daten der Kundendatendokumente.

Zweckmäßigerweise erfolgt, wenn eine große Menge an Anrufen in das Call Center eingeht, oder wenn einige Anrufe vom gleichen Anrufer regelmäßig und wiederholt das Call Center kontaktieren, eine Zwischenspeicherung des Kundendatendokumentes in einem Arbeitsdatenspeicher. Vom Agentenarbeitsplatz aus erfolgt dann ein Zugriff auf den Arbeitsdatenspeicher und damit auf das Kundendatendokument. Der Arbeitsdatenspeicher stellt somit eine von der Kundendatenbasis unabhängige Speichermöglichkeit oder "Datenbank" für Kundendaten bereit, auf die unabhängig von der Kundendatenbasis zugegriffen werden kann. Die Kundendatenbasis wird somit entlastet und gegen Risiken unerwünschter Zugriffe von den Agentenarbeitsplätzen gesichert.

Alternativ dazu kann das Kundendatendokument ohne Zwischenspeicherung direkt an den Agentenarbeitsplatz übermittelt werden. Die Zwischenspeicherung weist den Vorteil auf, dass gewisse Datenmengen, die sich ständig wiederholen, oder deren Bestand im wesentlichen gleich bleibt, fortgesetzt erneuert werden können oder stets für einen Zugriff bereitstehen. Sie ist natürlich mit einem erhöhten technischen Aufwand verbunden, da Speichereinrichtungen bereitgestellt werden müssen. Die Übermittlung von Kundendatendokumenten ohne Zwischenspeicherung gewährleistet einen zügigeren Verfahrensablauf, ist aber besonders bei komplizierten und mit einer Übermittlung großer Datenmengen verbundenen Operationen im Call Center aufwendiger.

Eine besonders vorteilhafte Möglichkeit der Erzeugung des Kundendatendokumentes besteht darin, dass von der CTI-Instanz ein Kundendatendokument in Form eines HTML-Dokumentes aus der Kundendatenbasis auf der Basis der Anruferdaten generiert wird. Der Zugriff auf das HTML-Dokument kann von dem Agentenarbeitsplatz aus mittels eines HTML-Browsers in den bekannten Versionen erfolgen.

Bei einer Zwischenspeicherung des so erzeugten HTML-Dokumentes ist der Arbeitsdatenspeicher Teil eines Webservers und die Zugriffsadresse wird dem HTML-Dokument als eine URL-Adresse zugeordnet. Die URL-Adresse wird dem Agentenarbeitsplatz durch die CTI-Instanz oder die Call-Center-Weiterleitung übermittelt. Wie bereits vorhergehend beschrieben, kann die Übermittlung der URL-Adresse unter der Steuerung durch Zugriffsberechtigungen entsprechend des Agentenprofiles erfolgen.

Eine Anordnung für eine automatische Anrufverteilung zum Ausführen des Verfahrens weist eine CTI-Instanz zur Weiterleitungssteuerung auf, der eine Einrichtung zum Erzeugen von Kundendatendokumenten zugeordnet ist.

Der CTI-Instanz ist dabei zusätzlich mit einer Einrichtung zum Umsetzen von Anruferdaten in den Anrufer betreffende Suchparameter für einen Suchvorgang innerhalb von Kundendaten in der Kundendatenbasis ausgestattet.

Weiterhin weist die CTI-Instanz eine Konvertierungseinrichtung zum Umsetzen eines ersten Datenformates der Kundendaten in der Kundendatenbasis in ein zweites Datenformat der Kundendaten des unabhängig von der Kundendatenbasis verfügbaren Kundendatendokuments auf.

Die CTI-Instanz oder die Call-Center-Weiterleitung weist darüber hinaus eine Einrichtung zum Übermitteln des erzeugten Kundendatendokumentes an einen mit der Call-Center-Weiterleitung oder der CTI-Instanz kommunikativ verbundenen Arbeitsdatenspeicher auf.

Der Call-Center-Weiterleitung oder der CTI-Instanz ist weiterhin eine Einrichtung zur Weiterleitung des Kundendatendokumentes und/oder der Zugriffsadresse des Kundendatendokumentes an den Agentenarbeitsplatz zugeordnet.

Weiterhin ist die CTI-Instanz zur Weiterleitungssteuerung mit einer Konvertierungseinrichtung zum Umsetzen von Anruferdaten aus einer automatischen Rufnummernidentifikation in Suchparameter für einen Suchvorgang von Kundendaten in der Kundendatenbasis ausgestattet. Diese Konvertierungseinrichtung stellt einen Zusammenhang zwischen den Anruferdaten und den mit dem Anrufer verbundenen Kundendaten einerseits und dem auf diese Kundendaten passenden Agentenprofil her und ermöglicht es einerseits, die richtigen Kundendaten aus dem Kundendatenbestand zu ermitteln und andererseits den dazu zuständigen Agenten zu ermitteln.

In einer weiteren zweckmäßigen Ausgestaltung der CTI-Instanz verfügt diese über eine weitere Konvertierungseinrichtung zum Umsetzen von Anruferdaten aus einem automatischen Telefondialog einer interaktiven Sprach-Antwort-Einheit in Suchparameter für einen Suchvorgang von Kundendaten in der Kundendatenbasis.

In einer dritten zweckmäßigen Ausgestaltung der CTI-Instanz ist eine Konvertierungseinrichtung zum Umsetzen von Anruferdaten aus einem DNIS-System in Suchparameter für einen Suchvorgang von Kundendaten in der Kundendatenbasis vorgesehen.

Weiterhin ist eine Zuordnungseinrichtung vorgesehen, bei der die Anruferdaten und die im Kundendatendokument vereinigten Kundendaten eines Anrufers einem einzelnen Agentenprofil oder einer Gesamtheit von Agentenprofilen zugeordnet werden. Die Zuordnungseinrichtung legt insbesondere Zugriffsrechte für einzelne Agenten auf einzelne Kundendatendokumente fest und definiert damit, welcher Agent für die weitere Bearbeitung des Kundendatendokumentes zuständig ist.

Weiterhin ist der CTI-Instanz eine Einrichtung zum Umsetzen von Kundendaten aus dem Datenformat der Kundendatenbasis in ein Datenformat einer Markup-Sprache des Kundendatendokumentes, insbesondere in das Datenformat der Markup-Sprache HTML zugeordnet.

Die Einrichtung zur Erzeugung der Zugriffsadresse ist vorteilhafterweise als eine Einrichtung zur Erzeugung einer URL-Adresse ausgebildet. Ein Datenformat in der Markup-Sprache HTML in Verbindung mit einer Adressangabe in Form einer URL stellt einen derzeit zur Datenübertragung weit verbreiteten Standard dar und ist unter allen verfügbaren Betriebs- und Rechnersystemen einsetzbar. Eine solche Ausgestaltung ist weiterhin besonders dadurch vorteilhaft, weil hier auf das bewährte und weithin verwendete Hypertext-Protokoll zurückgegriffen werden kann. Weiterhin können die in einem solchen Protokoll bzw. einer solchen Servereinrichtung standardisierten Mittel zur Vergabe von Zugriffsrechten verwendet werden, wodurch sich der Aufwand zur Implementierung des Verfahrens zur Verwaltung von CTI-Daten in eine bereits bestehende Call-Center-Architektur deutlich verringert.

Alternativ ist dem Agentenarbeitsplatz eine URL-Adresse fest zugeordnet, und das durch die CTI-Instanz als HTML-Dokument erzeugte Kundendatendokument wird bei einem dem Agentenarbeitsplatz zugeordneten Server gespeichert. Wird der Anrufer mit dem Agentenarbeitsplatz verbunden, so wird am Server eine Funktion "Aktualisieren" angestoßen und hierdurch das dem Anrufer bereitgestellte Kundendatendokument geöffnet.

Der Arbeitsdatenspeicher kann unter diesen Bedingungen als ein bezüglich der Komponenten der automatischen Anrufverteilung vollständig extern ausgeführter Webserver ausgeführt sein, der sowohl mit der CTI-Instanz, und/oder der Call-Center-Weiterleitung einerseits und dem Agentenarbeitsplatz andererseits in kommunikativer Verbindung steht.

Das erfindungsgemäße Verfahren wird im folgenden anhand von Ausführungsbeispielen und Figuren näher erläutert.

Dabei zeigen:
- Fig. 1:: ein Blockschaltbild mit einer Darstellung grundlegender Verfahrensabläufe und Verfahrensbestandteile in einer beispielhaften Anordnung einer automatischen Anrufverteilung; und
- Fig. 2:: ein Blockschaltbild mit einer Darstellung grundlegender Verfahrensabläufe und Verfahrensbestandteile in einer beispielhaften Anordnung einer automatischen Anrufverteilung in einer zweiten Ausführungsform.

Es werden für gleichartige Verfahrensschritte und Verfahrensbestandteile die selben Bezugszeichen verwendet.

Bei der nachfolgenden Darstellung wird von einem Kundendatendokument KDD ausgegangen, das in Form eines HTML-Dokumentes erzeugt wird. Die Zugriffsadresse wird mittels einer URL-Adresse URL realisiert. Die Zugriffsrechte der Agenten oder des Agentenarbeitsplatzes sind durch Agentenprofile AP1, AP2,..., APn vorab festgelegt.

Das Kundendatendokument KDD wird in einem Webserver WS gespeichert, der den Arbeitsdatenspeicher enthält. Auf der Seite der automatischen Anrufverteilung ACD sind als Komponenten eine Warteschleife WAIT, eine Call-Center-Weiterleitung CCR, eine CTI-Instanz CTII zur Weiterleitungssteuerung, eine interaktive Sprach-Antwort-Einheit IVR und eine Speichereinrichtung mit einer Kundendatenbasis KDB vorhanden.

Die CTI-Instanz CTII weist dabei software- und/oder hardwareartige Komponenten zu einer Generierung einer Zugriffsadresse in Form der URL-Adresse URL auf. Weiterhin ist in der CTI-Instanz CTII ein Agentenprofil AP beispielhaft vorgegeben. Die CTI-Instanz CTII enthält Mittel zur Formatierung eines Datenformates der Kundendatenbasis KDB in ein HTML-basiertes Kundendatendokument KDD. Die CTI-Instanz CTII ist weiterhin mit einem üblichen DNIS-Dienst zur Identifizierung vom Anrufer gewählter Nummern ausgestattet.

Weiterhin weist die Call-Center-Weiterleitung CCR eine automatische Rufnummern-Identifikation ANI auf und steht sowohl mit der CTI-Instanz CTII, als auch mit der interaktiven Sprach-Antworteinheit IVR in kommunikativer Verbindung. Die interaktive Sprach-Antwort-Einheit IVR dient hierbei zur Abwicklung des automatisierten Telefondialoges und einer damit gekoppelten Generierung sogenannter IVR-Items, die ebenfalls zu einer Spezifikation der Suchfunktionen der CTI-Instanz CTII innerhalb der Kundendatenbasis KDB beitragen.

Zu Beginn des Verfahrens nimmt ein Anrufer AR eine Verbindung mit dem Call-Center in einem Verfahrensschritt 1 auf. In dem hier dargestellten Anwendungsbeispiel wird dessen Anruf von der ACD-Komponente zunächst auf eine Warteschleife WAIT geleitet, wobei aber dessen Rufnummer mittels der automatischen Rufnummernidentifikation ANI identifiziert wird.

Es wird in einem ersten Anwendungsbeispiel davon ausgegangen, dass während des nachfolgenden gesamten Verfahrensablaufes die Warteschleife WAIT aktiviert ist und der Anrufer AR nicht zum Agentenarbeitsplatz AWP durchgestellt wird. Das hier zunächst dargestellte Verfahrensbeispiel geht also von dem Fall aus, dass die ACD-Einrichtung momentan überlastet ist und einen Anruf aus diesem Grunde nicht durchzustellen vermag. Das erfindungsgemäße Verfahren ist jedoch keinesfalls auf dieses Anwendungsbeispiel beschränkt und kann auch dann realisiert werden, wenn eine sofortige Verbindung zwischen Anrufer AR und Agentenarbeitsplatz AWP zustande kommt.

Während die Warteschleife WAIT aktiv ist, wird der Anruf in einem Verfahrensschritt 2 zur Call-Center-Weiterleitung CCR durchgestellt, die eine automatische Rufnummern-Identifikation ANI vornimmt. Die Resultate der automatischen Rufnummern-Identifikation ANI werden in einem Verfahrensschritt 3a an die CTI-Instanz CTII zur Weiterleitungssteuerung übermittelt. Die Informationen der automatischen Rufnummern-Identifikation ANI enthalten dabei mindestens die Rufnummer des Anrufers AR und erlauben anhand dieser eine eindeutige Identifikation des Anrufers AR. Die CTI-Instanz CTII benutzt diese Identifikation, um Suchparameter zu generieren und führt anhand der Suchparameter eine Suchoperation 5a innerhalb des vorgegebenen Kundendatenbestandes KDB aus, wobei die anruferbezogenen Kundendaten daraus in einem Verfahrensschritt 5b extrahiert werden. Dazu werden die Daten eines Agentenprofils AP berücksichtigt. Das Agentenprofil AP enthält Angaben über das Arbeitsgebiet des Agenten sowie über mit diesem Arbeitsgebiet verknüpfte Zugriffsrechte auf Kundendaten des Kundendatenbestandes KDB . Bei der Extraktion 5b der Kundendaten werden nur solche Kundendaten aus dem Kundendatenbestand KDB entnommen, die dem Agentenprofil AP entsprechen. Die extrahierten Kundendaten stellen somit eine dem Arbeitsgebiet des Agenten entsprechende Sammlung von notwendigen Informationen dar.

Die CTI-Instanz CTII generiert daraus ein Kundendatendokument KDD und eine dem Kundendatendokument KDD spezifisch zugeordnete URL, wobei dem Kundendatendokument KDD Parameter für Zugriffsberechtigungen entsprechend des Agentenprofiles AP zugeordnet werden und übergibt die URL in einem Verfahrensschritt 6 an die Call-Center-Weiterleitung CCR. Weiterhin wird in einem dazu zeitgleich ablaufenden Verfahrensschritt 7 das Kundendatendokument KDD zusammen mit der URL und den Zugriffsparametern des Agentenprofils AP an einen Webserver WS übertragen, der als Arbeitsdatenspeicher dient.

Parallel dazu führt die Call-Center-Weiterleitung CCR in einem Verfahrensschritt 8 eine Übermittlung der URL an den Agentenarbeitsplatz AWP aus. Dort wird die URL angezeigt und somit signalisiert, dass auf dem Webserver WS das Kundendatendokument KDD zur Bearbeitung bereitliegt.

Mittels der URL kann das Kundendatendokument KDD vom Webserver WS abgerufen werden. Da das Kundendatendokument KDD in der HTML-Sprache vorliegt und diesem eine URL zugeordnet ist, erfolgt der Zugriff in einem Verfahrensschritt 9 unter Verwendung eines Webbrowsers, der auf dem Agentenarbeitsplatz AWP installiert ist. Unter Verwendung des Webbrowsers, der die URL über einen Link anspricht, wird die URL an den Webserver WS übertragen.

Anschließend wird in einem Verfahrensschritt 10 das Kundendatendokument KDD an den Agentenarbeitsplatz AWP übermittelt und steht dort vorab zur Verfügung, sodass bei einer später durchgestellten Verbindung 11 zwischen Anrufer AR und Agentenarbeitsplatz AWP, dem Agenten die Kundendaten des Anrufers AR bereits zur Bearbeitung vorliegen.

Wird der Anruf ohne eine Verzögerung an einer Warteschleife WAIT sofort zu weiteren ACD-Komponenten durchgestellt, ist eine Kopplung zwischen sprachgesteuerter Bedienung durch den Anrufer AR und den ACD-Komponenten und Erstellung anruferspezifischer Kundendatendokumente KDD möglich. Eine solche Verfahrensweise wird im folgenden beschrieben.

Nach Ausführung der bereits vorhergehend beschriebenen Verfahrensschritte 1 und 2 wird der Anrufer durch die Call-Center-Weiterleitung CCR in einem Verfahrensschritt 3b mit der interaktiven Sprach-Antwort-Einheit IVR verbunden. Die interaktive Sprach-Antwort-Einheit IVR generiert aus der sprachgestützten Kommunikation zwischen der interaktiven Sprach-Antwort-Einheit IVR und dem Anrufer AR Datenwörter, die unter dem Begriff IVR-Item bekannt sind und leitet diese an die CTI-Instanz CTII in einem Verfahrensschritt 4 weiter. Aufgrund der IVR-Items erfolgt innerhalb der CTI-Instanz CTII eine Generierung von anruferspezifischen Suchparametern zur Auswahl der anruferspezifischen Daten unter Berücksichtigung des Agentenprofils AP verbunden mit der Generierung der URL. Anschließend erfolgen die bereits vorhergehend beschriebenen Verfahrensschritte 6 bis 10.

Eine weitere Möglichkeit zum Ausführen einer Such- und Auswahlprozedur anruferspezifischer Daten aus der Kundendatenbasis KDB ist durch eine Kopplung der CTI-Instanz CTII mit einem DNIS-System einerseits und der Kundendatenbasis KDB andererseits gegeben.

Das DNIS-System wird dann aktiviert, wenn ein Anrufer AR mittels einer gewählten Nummer zu einer Unterabteilung des Call Centers und damit zu einem bestimmten Agentenarbeitsplatz AWP eine Verbindung herzustellen versucht. Der Anrufer AR wählt in diesem Fall mittels einer bestimmten Rufnummer einen speziellen Agentenarbeitsplatzes AWP an. Diese Rufnummer wird über die Call-Center-Weiterleitung CCR an die CTI-Instanz CTII weitergeleitet und dort mittels des DNIS-Systems analysiert. Das DNIS-System generiert auf der Grundlage der vom Anrufer AR gewählten Rufnummer Steuerzeichen zur Vermittlung einer Verbindung zwischen Anrufer AR und Agentenarbeitsplatz AWP. Die aus der Kundendatenbasis KDB in den Schritten 5a und 5b ermittelten Kundendaten und das daraus generierte Kundendatendokument KDD wird unter Verwendung der Steuerzeichen des DNIS-Systems mit einem dem dem speziellen Agentenarbeitsplatz AWP zugeordneten Agentenprofil AP hinsichtlich seiner Zugriffsparameter und seines Dateninhaltes abgeglichen. Wie im vorangegangenen Beispiel wird eine dem Kundendatendokument KDD zugeordnete URL an den jeweiligen Agentenarbeitsplatz AWP übermittelt.

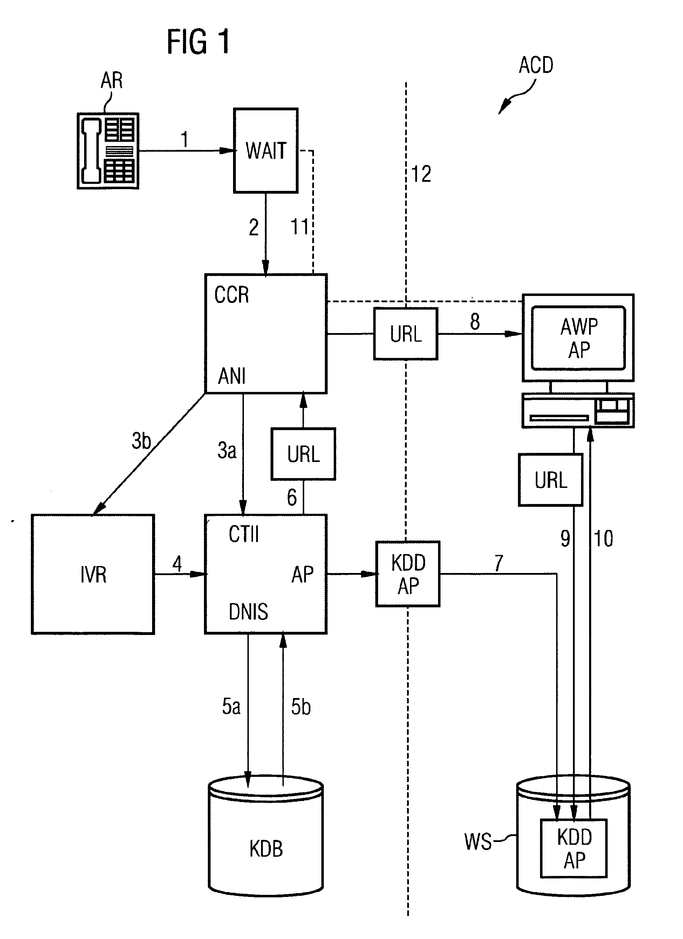

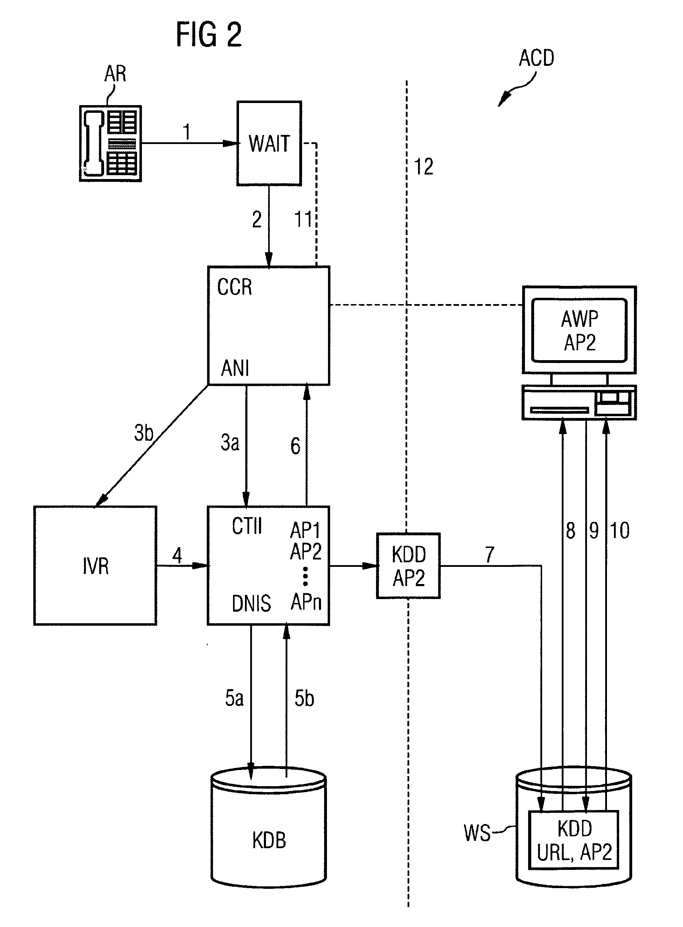

In Fig. 2 ist eine weitere Ausführungsform des erfindungsgemäßen Verfahrens in einem Blockschaltbild dargestellt. Im Unterschied zu der in Fig. 1 gezeigten Verfahrensvariante wird durch die CTI-Instanz CTII keine URL vergeben, sondern die CTI-Instanz CTII dient nur zur Festlegung von Dateninhalten und Zugriffsparametern des erzeugten Kundendatendokumentes KDD auf der Basis einer Zuordnung von Anruferdaten aus der Rufnummernidentifikation ANI, der interaktiven Sprach-Antwort-Einheit IVR oder des DNIS-Dienstes zu einer vorgegebenen Gesamtheit von Agentenprofilen AP1, AP2,..., APn sowie zur Übermittlung des Kundendatendokumentes KDD an einen externen Webserver WS. Im Vergleich zu dem in Fig. 1 gezeigten Anwendungsbeispiel kann der Webserver als ein sowohl gegenüber den Komponenten der automatischen Anrufverteilung ACD, als auch gegenüber dem Agentenarbeitsplatz AWP unabhängiger Server zur Datenverwaltung und -speicherung betrieben werden.

Die bereits beschriebenen Verfahrensschritte 1 bis 5a erfolgen analog dem in Fig. 1 beschriebenen Schritten. Im Unterschied zu den Verfahrensschritten aus Fig. 1 stellt die CTI-Instanz CTII eine Zuordnung zwischen den Anruferdaten und den im Verfahrensschritt 5a extrahierten Kundendaten mit einer Gesamtheit von vorgegebenen Agentenprofilen AP1,...,APn her. In dem in Fig. 2 dargestellten Ausführungsbeispiel ergibt sich als Resultat dieser Zuordnungsoperation, dass die extrahierten Kundendaten und die Anruferdaten einem Agentenprofil AP2 hinsichtlich des unter diesem Profil beschriebenen Arbeitsgebietes entsprechen. Das erzeugte Kundendatendokument KDD erhält somit Zugriffsparameter nach dem Agentenprofil AP2 und wird in einem Verfahrensschritt 7 an den Webserver übertragen und dort gespeichert, wobei der Webserver eine Zuordnung einer URL-Adresse für dieses Kundendatendokument KDD vornimmt. Über eine kommunikative Verbindung, beispielsweise eine Standleitung, wird das Vorhandensein des Kundendatendokumentes KDD an den Agentenarbeitsplatz AWP signalisiert, wobei bei einer Übereinstimmung des Agentenprofils AP2 an einem speziellen Agentenarbeitsplatz AWP mit dem durch das Agenten profil AP2 festgelegten Satz von Zugriffsparametern das unter der übermittelten URL angezeigte Kundendatendokument KDD für einen Zugriff freigegeben wird.

Die Agentenprofile AP1,...,APn können linear mit gleichwertigen, aber verschiedenen Zugriffsrechten verknüpft sein, aber auch hierarchisch abgestufte Zugriffsrechte repräsentieren. So ist es denkbar, einem Agentenprofil AP1 verschiedene Teilprofile in Form einer Baumstruktur unterzuordnen, die jeweils für verschiedene Einzelagenten gelten, wobei das Agentenprofil AP1 einen Zugriff auf alle Kundendatendokumente aller einzelnen Teilprofile erlaubt. Es ist somit möglich, eine Agentenstruktur eines Call-Centers auf die Zugriffsrechte der Kundendatendokumente KDD abzubilden, und somit in der Hierarchie vertikale und horizontale Sicherheitsebenen festzulegen und zu verändern.

Das erfindungsgemäße Verfahren ist nicht auf diese hier dargestellten Ausführungsbeispiele beschränkt, sondern im Rahmen fachgemäßen Handelns erweiterbar. Dies betrifft insbesondere Anwendungen in artverwandten, dem Call Center vergleichbaren Bereichen, wie Kontaktcenter mit Einrichtungen für einen Chat, Interaktionen zwischen Agent und Anrufer über ein Kommunikationsnetz oder Anrufdurchstellungen, die dem Fachmann unter den Begriffen "Outbound" oder "Outbound calling" geläufig sind.

In der Figur wird unabhängig von den konkret vorliegenden Verfahrensvarianten stets eine Datenzugriffsgrenze 12 zwischen den Datenmengen, die im Kundendatenbestand KDD vorliegen und jenen, auf die vom Agentenarbeitsplatz AWP zugegriffen werden kann, eingehalten. Diese ist in der Figur als eine punktierte Linie angedeutet. Vom Agentenarbeitsplatz AWP aus ist von vornherein nur ein Zugriff auf die Kundendatendokumente KDD innerhalb des Webservers WS möglich, der von der ACD-Anordnung mit Daten versorgt wird, wobei durch die beschriebenen Verfahrensvarianten stets sicher-gestellt ist, welche Kundendaten durch die ACD-Anordnung in ein Kundendatendokument KDD überführt und auf den Webserver WS übertragen werden.

## Patentansprüche

1. Verfahren zur Verwaltung von Daten in einer automatischen Anrufverteilung (ACD), umfassend eine Call-Center-Weiterleitung (CCR), eine CTI-Instanz (CTII) zur Weiterleitungssteuerung und/oder eine interaktive Sprach-Antwort-Einheit (IVR) sowie eine Kundendatenbasis (KDB) und einen Agentenarbeitsplatz (AWP),wobei
- von der Call-Center-Weiterleitung (CCR) und/oder der interaktiven Sprach-Antwort-Einheit (IVR) Anruferdaten eines Anrufers (AR) an die CTI-Instanz (CTII) übermittelt werden,
- anschließend durch die CTI-Instanz (CTII) auf der Basis der Anruferdaten den Anrufer (AR) betreffende Kundendaten aus der Kundendatenbasis (KDB) ermittelt werden,
- durch die CTI-Instanz (CTII) die Kundendaten in ein Kundendatendokument (KDD) formatiert und einem Agenten zugeordnet werden,
**dadurch gekennzeichnet, dass**
eine Zuordnung des erzeugten Kundendatendokumentes (KDD) zum jeweiligen Agentenarbeitsplatz (AWP) unter abgestuften Zugriffsberechtigungen erfolgt, wobei
- bei einem Einbuchungsvorgang eines Agenten und/oder eines Agentenarbeitsplatzes (AWP) ein Agentenprofil (AP) mit einer vorab festgelegten Zugriffsberechtigung auf Kundendatendokumente (KDD) aktiviert wird
- das Kundendatendokument (KDD) mit zum aktivierten Agentenprofil (AP) passenden Kundendaten und Zugriffsrechten generiert wird
- über den Agentenarbeitsplatz (AWP) ein Zugriff auf Daten dieses Kundendatendokumentes (KDD) erfolgt.

2. Verfahren nach Anspruch 1,
**dadurch gekennzeichnet, dass**
dem Kundendatendokument (KDD) eine Zugriffsadresse zugeordnet wird, die auf einen durch das Kundendatendokument (KDD) belegten Speicherbereich eines Arbeitsspeichers verweist, wobei die Zugriffsadresse des Kundendatendokumentes (KDD) an den Agentenarbeitsplatz (AWP) mit dem zum erzeugten Kundendatendokument (KDD) passenden Agentenprofil (AP) übermittelt wird.

3. Verfahren nach einem der vorhergehenden Ansprüche,
**dadurch gekennzeichnet, dass**
das Kundendatendokument (KDD) in einem von den Komponenten der automatischen Anrufverteilung (ACD) unabhängigen Arbeitsdatenspeicher für einen von dem Agentenarbeitsplatz (AWP) aus erfolgenden Zugriff zwischengespeichert wird.

4. Verfahren nach einem der vorhergehenden Ansprüche,
**dadurch gekennzeichnet, dass**
die CTI-Instanz (CTII) das Kundendatendokument (KDD) als ein Dokument im Datenformat einer Markup-Sprache, insbesondere als ein HTML-Dokument, erzeugt und der Zugriff auf das Kundendatendokument (KDD) von dem Agentenarbeitsplatz (AWP) mittels eines Browsers für eine Markup-Sprache, insbesondere eines HTML-Browsers, erfolgt.

5. Verfahren nach einem der Ansprüche 3 und 4,
**dadurch gekennzeichnet, dass**
das durch die CTI-Instanz (CTII) als HTML-Dokument erzeugte Kundendatendokument (KDD) in einem als Webserver (WS) ausgebildeten Arbeitsdatenspeicher gespeichert wird, wobei
- dem HTML-Dokument eine URL-Adresse (URL) als Zugriffsadresse zugeordnet wird und
- die URL-Adresse (URL) an den Agentenarbeitsplatz (AWP) durch die CTI-Instanz (CTII) oder die Call-Center-Weiterleitung (CCR) übermittelt wird.

6. Verfahren nach Anspruch 4,
**dadurch gekennzeichnet, dass**
dem Agentenarbeitsplatz (AWP) eine URL-Adresse (URL) fest zugeordnet ist und das durch die CTI-Instanz (CTII) als HTML-Dokument erzeugte Kundendatendokument (KDD) bei einem dem Agentenarbeitsplatz (AWP) zugeordneten Server (WS) gespeichert wird, wobei bei der Verbindung des Anrufers (AR) mit dem Agentenarbeitsplatz (AWP) am Server (WS) eine Funktion "Aktualisieren" angestoßen und hierdurch das bereitgestellte Kundendatendokument (KDD) geöffnet wird.

7. Anordnung für eine automatische Anrufverteilung (ACD) zum Ausführen eines Verfahrens nach einem der vorhergehenden Ansprüche,
**gekennzeichnet durch**
- eine Call-Center-Weiterleitung (CCR) zur Weiterleitung von Anruferdaten,
- eine CTI-Instanz zur Weiterleitungssteuerung
-- mit einer Einrichtung zum Umsetzen von Anruferdaten in Suchparameter für einen Suchvorgang innerhalb von Kundendaten in einer Kundendatenbasis (KDB),
-- mit einer Konvertierungseinrichtung zum Umsetzen eines ersten Datenformates von Daten einer Kundendatenbasis (KDB) in ein zweites Datenformat eines unabhängig von der Kundendatenbasis (KDB) verfügbaren Kundendatendokumentes (KDD) mit zu einem Agentenprofil (AP) passenden Kundendaten und Zugriffsrechten,
- einen Arbeitsdatenspeicher der mit der CTI-Instanz (CTII) kommunikativ verbundenen ist,
- eine der Call-Center-Weiterleitung (CCR) oder der CTI-Instanz (CTII) zugeordnete Einrichtung zur Weiterleitung des Kundendatendokumentes (KDD) und/oder einer Zugriffsadresse des Kundendatendokumentes (KDD) an einen Agentenarbeitsplatz (AWP).

8. Anordnung nach Anspruch 7,
**gekennzeichnet durch**
eine CTI-Instanz (CTII) mit einer ersten Konvertierungseinrichtung zum Umsetzen von aus einer automatischen Rufnummernidentifikation (ANI) ermittelten Anruferdaten in Suchparameter für einen Suchvorgang von Kundendaten in der Kundendatenbasis (KDB).

9. Anordnung nach Anspruch 7,
**gekennzeichnet durch**
eine CTI-Instanz (CTII) mit einer zweiten Konvertierungseinrichtung zum Umsetzen von Anruferdaten aus einem automatisierten Telefondialog einer interaktiven Sprach-Antwort-Einheit (IVR) in Suchparameter für einen Suchvorgang von Kundendaten in der Kundendatenbasis (KDB).

10. Anordnung nach Anspruch 7,
**gekennzeichnet durch**
eine CTI-Instanz (CTII) mit einer dritten Konvertierungseinrichtung zum Umsetzen von Anruferdaten aus einem DNIS-System in Suchparameter für einen Suchvorgang von Kundendaten in der Kundendatenbasis (KDB).

11. Anordnung nach einem der Ansprüche 7 bis 10,
**gekennzeichnet durch**
eine Zuordnungseinrichtung zur Zuordnung der Anruferdaten und der aus dem Suchvorgang gewonnenen Kundendaten zu den Daten eines Agentenprofiles (AP2) und/oder einer Gesamtheit von A-gentenprofilen (AP1,...APn).

12. Anordnung nach einem der Ansprüche 7 bis 11,
**gekennzeichnet durch**
eine der CTI-Instanz (CTII) zugeordnete Einrichtung zum Umsetzen von Kundendaten aus dem Datenformat der Kundendatenbasis (KDB) in ein Datenformat eines Kundendatendokumentes (KDD) in einer Markup-Sprache, insbesondere in das Datenformat der Markup-Sprache HTML.

13. Anordnung nach einem der Ansprüche 7 bis 11,
**gekennzeichnet durch**
eine der CTI-Instanz (CTII) zugeordnete Einrichtung zum Erzeugen einer als URL-Adresse (URL) ausgebildeten Zugriffsadresse des Kundendatendokumentes (KDD).

14. Anordnung nach einem der Ansprüche 7 bis 13,
**dadurch gekennzeichnet, dass**
dem Agentenarbeitsplatz (AWP) eine URL-Adresse (URL) fest zugeordnet und dort eine Funktion "Aktualisieren" implementiert ist, mit der bei Verbindung eines Anrufers (AR) mit dem Agentenarbeitsplatz (AWP) ein der URL-Adresse (URL) bereitgestelltes Kundendatendokument (KDD) geöffnet wird.

15. Anordnung nach einem der Ansprüche 7 bis 14,
**gekennzeichnet durch**
einen als bezüglich der Komponenten der automatischen Anrufverteilung (ACD) extern ausgeführten Webserver (WS) ausgebildeten und sowohl mit der CTI-Instanz (CTII) und/oder der Call-Center-Weiterleitung (CCR) als auch mit dem Agentenarbeitsplatz (AWP) kommunikativ verbundenen Arbeitsdatenspeicher mit einer Speichereinrichtung für Kundendatendokumente (KDD) im HTML-Datenformat in Verbindung mit als URL-Adressen (URL) ausgebildeten Zugriffsadressen.

## Claims

1. Method for managing data in an automatic call distribution (ACD), comprising a call center forwarding (CCR), a CTI instance (CTII) for forwarding control and/or an interactive voice response unit (IVR) as well as a customer database (KDB) and an agent workstation (AWP), with
- caller data of a caller (AR) being transmitted from the call center forwarding (CCR) and/or the interactive voice response unit (IVR) to the CTI instance (CTII),
- customer data referring to the caller (AR) then being determined from the customer database (KDB) by the CTI instance (CTII) on the basis of the caller data,
- the customer data being formatted in a customer data document (KDD) by the CTI instance (CTII) and assigned to an agent,
**characterized in that**
a first type of assignment of the created customer data document (KDD) to the particular agent workstation (AWP) takes place using graded access rights, with
- during a booking-in process of an agent and/or an agent workstation (AWP), an agent profile (AP) being activated with a previously-specified access right to customer data documents (KDD)
- the customer data document (KDD) being generated with customer data and access rights matched to the activated agent profile (AP)
- access to the data of this customer data document (KDD) taking place via the agent workstation (AWP).

2. Method in accordance with one of the preceding claims,
**characterized in that**,
an access address is assigned to the customer data document (KDD) that refers to an area of a working memory occupied by the customer data document (KDD), with the access address of the customer data document (KDD) being transmitted to the agent workstation (AWP) with the agent profile (AP) matching the customer data document (KDD) to be created.

3. Method in accordance with one of the preceding claims,
**characterized in that**
the customer data document (KDD) is buffer stored in a working data memory independent of the components of the automatic call distribution (ACD), for access from the agent workstation (AWP) .

4. Method in accordance with one of the preceding claims,
**characterized in that**
the CTI instance (CTII) creates the customer data document (KDD) as a document in the data format of a markup language, in particular as a HTLM document, and access to the customer data document (KDD) from the agent workstation (AWP) takes place by means of a browser for a markup language, in particular a HTML browser.

5. Method in accordance with claim 3 and 4,
**characterized in that**
the customer data document (KDD) created by the CTI instance (CTII) as a HTML document is stored in a working data memory formed as a webserver (WS), with
- a URL address (URL) being assigned as the access address to the HTML document and
- the URL address (URL) being transmitted to the agent workstation (AWP) through the CTI instance (CTII) or the call center forwarding (CCR).

6. Method in accordance with claim 4,
**characterized in that**
a URL address (URL) is permanently assigned to the agent workstation (AWP) and the customer data document (KDD) created as a HTML document by the CTI instance (CTII) is stored in a server (WS) assigned to the agent workstation (AWP), with an "update" function being triggered by the connection of the caller (AR) to the agent workstation (AWP) on the server (WS) and the prepared customer data document (KDD) being opened by this.

7. Arrangement for an automatic call distribution (ACD) for implementing a method in accordance with one of the preceding claims,
**characterized by**
- call center forwarding (CCR) for forwarding caller data,
- a CTI instance (CTII) for forwarding control
-- with a device for converting caller data into search parameters for searching customer data in a customer database (KDB),
-- with a converting device for converting a first data format of data of a customer database (KDB) to a second data format of a customer data document (KDD), available independent of the customer database (KDB), with customer data and access rights being matched to the agent profile (AP),
- a working data memory with a communication connection to the CTI instance (CTII),
- a device assigned to the call center forwarding (CCR) or the CTI instance (CTII) for forwarding the customer data document (KDD) and/or an access address of the customer data document (KDD) to an agent workstation (AWP).

8. Arrangement in accordance with claim 7,
**characterized by**,
a CTI instance (CTII) with a first converting device for converting caller data determined from an automatic call number identification (ANI) into search parameters for a search operation for customer data in the customer database (KDB) .

9. Arrangement in accordance with claim 9,
**characterized by**,
a CTI instance (CTII) with a second conversion device for converting caller data from an automated telephone dialog of an interactive voice response unit (IVR) into search parameters for a search operation for customer data in the customer database (KDB).

10. Arrangement in accordance with claim 7,
**characterized by**,
a CTI instance (CTII) with a third converting device for converting caller data from a DNIS system into search parameters for a search operation of customer data in the customer database (KDB).

11. Arrangement in accordance with one of claims 7 to 10,
**characterized by**,
an assignment device for assigning the caller data and the customer data obtained from the search to the data of an agent profile (AP2) and/or a totality of agent profiles (AP1, ... APn) .

12. Arrangement in accordance with one of claims 7 to 11,
**characterized by**,
a device assigned to the CTI instance (CTII) for converting customer data from the data format of the customer database (KDB) to a data format of a customer data document (KDD) in a markup language, in particular to the data format of the HTML markup language.

13. Arrangement in accordance with on of claims 7 to 12,
**characterized by**,
a device assigned to the CTI instance (CTII0 for creating an access address of the customer data document (KDD) formed as a URL address (URL).

14. Arrangement in accordance with one of claims 7 to 13,
**characterized in that**,
a URL address (URL) is permanently assigned to the agent workstation (AWP) and an "update" function is implemented there, with the customer data document (KDD) provided to the URL address (URL) being opened when the caller (AR) is connected to the agent workstation (AWP).

15. Arrangement in accordance with one of claims 7 to 14,
**characterized by**,
a working data memory formed as a webserver (WS) external relative to the components of the automatic call distribution (ACD) and having a communication connection both to the CTI instance (CTII) and/or the call center forwarding (CCR) and the agent workstation (AWP), with a memory device for customer data documents (KDD) in HTML data format in conjunction with access addresses formed as URL addresses (URL).

## Revendications

1. Procédé pour gérer des données dans une distribution d'appels automatique (ACD), comprenant un dispositif de réacheminement de centre d'appel (CCR), une instance de CTI (CTII) pour la commande de réacheminement et/ou une unité de réponse vocale interactive (IVR) ainsi qu'une base de données clients (KDB) et un poste de travail d'agent (AWP),
- les données d'appelant d'un appelant (AR) étant transmises à l'instance de CTI (CTII) par le dispositif de réacheminement de centre d'appel (CCR) et/ou l'unité de réponse vocale interactive (IVR),
- des données clients concernant l'appelant (AR) et provenant de la base de données clients (KDB) étant déterminées ensuite par l'instance de CTI (CTII) sur la base des données d'appelant,
- les données clients étant formatées par l'instance de CTI (CTII) dans un document de données clients (KDD) et attribuées à un agent,
**caractérisé en ce que**
une attribution du document de données clients (KDD) généré au poste de travail d'agent (AWP) concerné s'effectue avec des autorisations d'accès échelonnées,
- un profil d'agent (AP) étant activé avec une autorisation d'accès définie auparavant à des documents de données clients lors d'une opération d'inscription d'un agent et/ou d'un poste de travail d'agent (AWP)
- le document de données clients (KDD) étant généré avec des données clients et droits d'accès allant avec le profil d'agent (AP) activé
- un accès à des données de ce document de données clients (KDD) s'effectuant par le poste de travail d'agent (AWP).

2. Procédé selon la revendication 1, **caractérisé en ce que** une adresse d'accès est attribuée au document de données clients (KDD), laquelle renvoie à une zone de stockage, occupée par le document de données clients (KDD), d'une mémoire de travail, l'adresse d'accès du document de données clients (KDD) étant transmise au poste de travail d'agent (AWP) avec le profil d'agent (AP) allant avec le document de données clients (KDD) généré.

3. Procédé selon l'une quelconque des revendications précédentes,
**caractérisé en ce que**
le document de données clients (KDD) est stocké provisoirement dans une mémoire de données de travail indépendante des composants de la disposition d'appel automatique (ACD) pour un accès s'effectuant à partir du poste de travail d'agent (AWP).

4. Procédé selon l'une quelconque des revendications précédentes,
**caractérisé en ce que**
l'instance de CTI (CTII) génère le document de données clients (KDD) sous la forme d'un document dans le format de données d'un langage de balisage, en particulier sous la forme d'un document HTML, et l'accès au document de données clients (KDD) s'effectue par le poste de travail d'agent (AWP) au moyen d'un logiciel de navigation pour un langage de balisage, en particulier d'un logiciel de navigation HTML.

5. Procédé selon l'une quelconque des revendications 3 et 4,
**caractérisé en ce que**
le document de données clients (KDD) généré par l'instance de CTI (CTII) sous forme de document HTML est stocké dans une mémoire de données de travail réalisée sous la forme de serveur Web (WS),
- une adresse URL (URL) étant attribuée comme adresse d'accès au document HTML
- et l'adresse URL (URL) étant transmise au poste de travail d'agent (AWP) par l'instance de CTI (CTII) ou le dispositif de réacheminement de centre d'appel (CCR).

6. Procédé selon la revendication 4,
**caractérisé en ce que**
une adresse URL (URL) est attribuée de façon fixe au poste de travail d'agent (AWP) et le document de données clients (KDD) généré par l'instance de CTI (CTII) sous forme de document HTML est stocké auprès d'un serveur (WS) attribué au poste de travail d'agent (AWP), une fonction "actualisation" étant déclenchée lors de la liaison de l'appelant (AR) avec le poste de travail d'agent (AWP) sur le serveur (WS) et le document de données clients (KDD) mis à disposition étant ouvert de cette façon.

7. Dispositif pour une distribution d'appels automatique (ACD) pour la mise en oeuvre d'un procédé selon l'une quelconque des revendications précédentes,
**caractérisé par**
- un dispositif de réacheminement de centre d'appel (CCR) pour le réacheminement de données d'appelant,
- une instance de CTI pour la commande de réacheminement
- - avec un dispositif pour la conversion de données d'appelant en paramètres de recherche pour une opération de recherche à l'intérieur de données clients dans une base de données clients (KDB),
- - avec un dispositif de conversion pour la conversion d'un premier format de données de données d'une base de données clients (KDB) en un second format de données d'un document de données clients (KDD) disponible indépendamment de la base de données clients (KDB) avec des données clients et des droits d'accès allant avec un profil d'agent (AP),
- une mémoire de données de travail qui est reliée de façon communicative à l'instance de CTI (CTII),
- un dispositif attribué au système de réacheminement de centre d'appel (CCR) ou à l'instance de CTI (CTII) pour le réacheminement du document de données clients (KDD) et/ou d'une adresse d'accès du document de données clients (KDD) à un poste de travail d'agent (AWP).

8. Dispositif selon la revendication 7,
**caractérisé par**
une instance de CTI (CTII) avec un premier dispositif de conversion pour la conversion de données d'appelant déterminées à partir d'une identification automatique de numéros d'appel (ANI) en paramètres de recherche pour une opération de recherche de données clients dans la base des données clients (KDB).

9. Dispositif selon la revendication 7,
**caractérisé par**
une instance de CTI (CTII) avec un second dispositif de conversion pour la conversion de données d'appelant provenant d'un dialogue de téléphone automatisé d'une unité de réponse vocale interactive (IVR) en paramètres de recherche pour une opération de recherche de données clients dans la base de données clients (KDB).

10. Dispositif selon la revendication 7,
**caractérisé par**
une instance de CTI (CTII) avec un troisième dispositif de conversion pour la conversion de données d'appelant provenant d'un système DNIS en paramètres de recherche pour une opération de recherche de données clients dans la base de données clients (KDB).

11. Dispositif selon l'une quelconque des revendications 7 à 10,
**caractérisé par**
un dispositif d'attribution pour l'attribution des données d'appelant et des données clients obtenues à partir de l'opération de recherche aux données d'un profil d'agent (AP2) et/ou un ensemble de profils d'agent (AP1, ..., APn).

12. Dispositif selon l'une quelconque des revendications 7 à 11,
**caractérisé par**
un dispositif attribué à l'instance de CTI (CTII) pour la conversion de données clients provenant du format de données de la base de données clients (KDB) en un format de données d'un document de données clients (KDD) dans un langage de balisage, en particulier dans le format de données du langage de balisage HTML.

13. Agencement selon l'une quelconque des revendications 7 à 11,
**caractérisé par**
un dispositif attribué à l'instance de CTI (CTII) pour générer une adresse d'accès, réalisée sous forme d'adresse URL (URL), du document de données clients (KDD).

14. Agencement selon l'une quelconque des revendications 7 à 13,
**caractérisé en ce que**
une adresse URL (URL) est attribuée de façon fixe au poste de travail d'agent (AWP) et une fonction "actualisation" est mise en place à cet endroit, fonction avec laquelle un document de données clients (KDD) mis à la disposition de l'adresse URL (URL) est ouvert lors de la liaison d'un appelant (AR) avec le poste de travail d'agent (AWP).

15. Agencement selon l'une quelconque des revendications 7 à 14,
**caractérisé par**
une mémoire de données de travail réalisée sous forme de serveur Web (WS) exécuté de façon externe en ce qui concerne les composants de la distribution d'appels automatique (ACD) et relié de façon communicative aussi bien avec l'instance de CTI (CTII) et/ou le dispositif de réacheminement de centre d'appel (CCR) qu'avec le poste de travail d'agent (AWP) avec un dispositif de stockage pour des documents de données clients (KDD) dans le format de données HTML en liaison avec des adresses d'accès conçues sous forme d'adresses URL (URL).
